# EUROPÄISCHE PATENTSCHRIFT

(11) **EP 2 469 481 B1**
(45) Veröffentlichungstag und Bekanntmachung des Hinweises auf die Patenterteilung: **30.01.2019**
(21) Anmeldenummer: 11195017.6
(22) Anmeldetag: 21.12.2011
(51) Int. Cl.: G07C 9/00, G06F 21/00

(54) **Sicherungssystem und Sicherungsverfahren**
Safety system and safety method
Système de sécurisation et procédé de sécurisation

(30) Priorität: 21.12.2010 EP 10196204
(43) Veröffentlichungstag der Anmeldung: 27.06.2012
(73) Patentinhaber: SimonsVoss Technologies GmbH, 85774 Unterföhring (DE)
(72) Erfinder: Meyerle, Herbert, 82216 Maisach (DE)
(74) Vertreter: Vossius & Partner Patentanwälte Rechtsanwälte mbB

(56) Entgegenhaltungen:
- WO-A1-01/26067
- DE-A1- 19 808 650
- GB-A- 2 399 924
- US-A1- 2008 184 355
- US-A1- 2009 036 097

## Beschreibung

Die vorliegende Erfindung betrifft ein Sicherungssystem bzw. -verfahren, einen drahtlosen elektronischen Schlüssel für ein Sicherungssystem sowie eine Gegenstation zum Sichern eines Zugriffs auf ein Objekt. Allgemein betrifft die vorliegende Erfindung Verfahren und Einrichtungen zum sicheren personalisierten Identifizieren und Ermöglichen bzw. Verhindern eines logischen und/oder physikalischen Zugangs bzw. Zugriffs zu einer bzw. auf eine Gegenstation/Zieleinrichtung und/oder ein damit gekoppeltes Objekt.

Insbesondere betrifft die Erfindung ein Sicherungssystem bzw. -verfahren, bei dem unter Verwendung eines drahtlosen elektronischen Schlüssels ein berechtigter Zugriff auf ein Objekt in Anwesenheit des drahtlosen elektronischen Schlüssels in einem definierten Umkreis zum Objekt gesteuert werden kann, wobei insbesondere der Energieverbrauch des erfindungsgemäßen drahtlosen elektronischen Schlüssels reduziert werden kann.

Der Anwendungsbereich der vorliegenden Erfindung ist vielfältig und umfasst insbesondere den Zugriff zu Datenverarbeitungsanlagen wie Computer oder Laptops.

### HINTERGRUND DER ERFINDUNG

Es sind Zugriffskontroll-Systeme bekannt, bei denen nur in Anwesenheit eines Transmitters oder eines Transponders ein Zugriff auf ein abzusicherndes Objekt möglich ist. Sobald sich der Transponder von dem System räumlich entfernt, wird der Zugriff bzw. ein Zugang gesperrt.

Solche Systeme sind beispielsweise aus dem Bereich der Waffensicherungen bekannt. So bezieht sich die EP-Anmeldung EP 1 936 572 auf eine Waffenabsicherung bei der die Waffe nur abgefeuert werden kann, wenn der Transponder in Reichweite der Waffe ist. Zudem wird in der US 2005/0071647 ein ähnliches Verfahren offenbart. Um diese bekannten Systeme vor Manipulationen, d.h. vor unberechtigten Zugriffen zu sichern, muss kontinuierlich eine Datenkommunikation zwischen dem Transponder und dem abzusichernden Objekt stattfinden. Vorzugsweise findet diese Kommunikation verschlüsselt statt, um das System zusätzlich vor Manipulationen zu sichern.

Auch aus anderen technischen Gebieten wie beispielsweise der Automobilindustrie sind ähnliche Systeme bekannt. So wird in der GB 2 399 924 ein Authentifizierungssystem beschrieben das drahtlos feststellen soll, ob sich ein Fahrer mit einem vom Fahrer mitgeführten Teil innerhalb des Fahrzeugs befindet.

Es sind Systeme mit passiven und aktiven Transpondern bekannt, wobei bei der Verwendung von passiven Transpondern die gesamte Energie von dem zu sichernden Objekt aufzubringen ist. Dies ist bei portablen bzw. batteriebetriebenen Objekten sehr energieineffizient und nachteilig. In diesen Fällen werden häufig aktive Transponder verwendet, d.h., Transponder die selbst mit einer Energiequelle ausgestattet sind. Um das Objekt zu sichern, muss der aktive Transponder permanent bzw. kontinuierlich einen Identifizierungscode in Form von Datensignalen übermitteln, was zu relativ großen Datenmengen führen kann, die ausgesendet werden müssen und entsprechend einen hohen Energieverbrauch auf der Seite des aktiven Transponders darstellen.

Es ist daher eine Aufgabe der vorliegenden Erfindung die oben genannten Nachteile des Standes der Technik zu überwinden und ein verbessertes und insbesondere energieeffizienteres Sicherungssystem und Sicherungsverfahren bereitzustellen, das dennoch manipulationssicher ist. Insbesondere ist es eine Aufgabe der vorliegenden Erfindung, den Energieverbrauch eines drahtlosen elektronischen Schlüssels, der vorzugsweise eine eigene Energiequelle aufweist, stark zu reduzieren, wodurch der drahtlose elektronische Schlüssel eine lange Lebensdauer hat und von einem Benutzer vorzugsweise über mehrere Jahre benutzt werden kann, ohne einen Batteriewechsel durchführen zu müssen bzw. einen Akku aufladen zu müssen. Trotz Reduzierung des Energieverbrauchs soll jedoch die Sicherheit des Zugriffs nicht bzw. nicht wesentlich reduziert werden.

Die Aufgabe der vorliegenden Erfindung wird durch die unabhängigen Vorrichtungs- bzw. Verfahrensansprüche bzw. die unten diskutierten Aspekte gelöst. Die abhängigen Ansprüche beschreiben weitere bevorzugte Ausführungsformen und Abwandlungen der Erfindung.

### ZUSAMMENFASSUNG DER ERFINDUNG

Die Aufgabe der vorliegenden Erfindung wird durch die Merkmalskombination des unabhängigen Anspruchs 1 bzw. des korrespondierenden unabhängigen Verfahrensanspruch 10 gelöst. Weitere bevorzugte erfindungsgemäße Ausführungsformen werden in den abhängigen Ansprüchen definiert.

Generell betrifft die vorliegende Erfindung ein Sicherungssystem mit einer Basisstation (im Folgenden auch manchmal als Gegenstation bezeichnet) und einem drahtlosen elektronischen Schlüssel, wobei die Basisstation mit einem zu sichernden Objekt gekoppelt werden kann oder bereits mit dem zu sichernden Objekt gekoppelt ist. Die Basisstation steuert den Zugriff auf das Objekt in Abhängigkeit von Datensignalen, die die Basisstation vom drahtlosen elektronischen Schlüssel empfängt. Der einfachste Fall einer Steuerung eines Zugriffs ist "ja" oder "nein", d.h. Zugriff erlaubt bzw. nicht erlaubt.

Bei dem zu schützenden System kann es sich um jedes System handeln, das gegen unberechtigten Zugriff in Abwesenheit des Benutzers abgesichert werden soll, beispielsweise ein Computer, Laptop, Kopierer oder ein Mobiltelefon, um nur wenige Beispiele zu nennen. Die Basisstation kann in dem zu schützenden Objekt bereits integriert sein oder mit einem Nachrüstsatz, beispielsweise in Form eines USB-Dongles, abgesichert werden.

Im Folgenden wird zur Vereinfachung des Sachverhalts nun auch von einer Kommunikation des drahtlosen elektronischen Schlüssels mit dem Objekt die Rede sein, ohne explizit auf die Basisstation zu verweisen, wobei diese Basisstation in diesen Fällen implizit zum Objekt dazugehörig angenommen wird.

Allgemein betrifft die Erfindung einen drahtlosen elektronischen Schlüssel der geeignet ist, Datensignale drahtlos auszusenden und/oder zu empfangen. Vorzugsweise sendet der erfindungsgemäße drahtlose elektronische Schlüssel die Daten als Funksignale aus, die vorzugsweise moduliert sind und entsprechend von der Basisstation (tatsächlich) empfangen werden und demoduliert werden können. Gemäß einer anderen Ausführungsform kann der erfindungsgemäße drahtlose elektronische Schlüssel die Daten auch als Lichtsignale (Infrarot) aussenden. Der erfindungsgemäße drahtlose elektronische Schlüssel steuert vorzugsweise ob, wann, und in welcher Art und Weise Datensignale ausgesendet werden sollen und/oder empfangen werden sollen.

Erfindungsgemäß kann der drahtlose elektronische Schlüssel auch als Transponder realisiert sein. Üblicherweise versteht man unter einem Transponder ein Funk-Kommunikationsgerät, das eingehende Signale aufnimmt und automatisch beantwortet bzw. weiterleitet. Der Begriff Transponder ist zusammengesetzt aus den Begriffen Transmitter und Responder. Ein erfindungsgemäßer Transponder kann jedoch entgegen der üblichen Lehre selbst bestimmen, ob, wann, und in welcher Art und Weise Datensignale ausgesendet werden, d.h., der erfindungsgemäße Transponder ist nicht auf Ausführungen beschränkt, bei denen eingehende Signale automatisch beantwortet werden. Im Folgenden wird daher vorzugsweise der Begriff des drahtlosen elektronischen Schlüssels verwendet, wobei in der Technik auch häufig der Begriff des Transponders verwendet wird, der erfindungsgemäß synonym mit dem Begriff des erfindungsgemäßen drahtlosen elektronischen Schlüssels zu verstehen ist.

Ein Transponder ist ein vorzugsweise kleiner, tragbarer mikroelektronischer Schaltkreis mit einer Sende- und Empfangseinrichtung, mit einer Steuerlogik und mit einem Datenspeicher (passiver und aktiver Transponder). Zudem haben aktive Transponder eine eigene Energieversorgung. Mit Hilfe eines Transponders können Informationen mit einer sich in Sendereichweite befindlichen Lesestation (in der vorliegenden Anmeldung auch als Basisstation bezeichnet) drahtlos ausgetauscht werden. Transponder werden dadurch häufig als Medium (Identmedium) für die berührungslose Identifikation (Personenidentifikation) von Objekten und Personen eingesetzt. Bezüglich der Stromversorgung unterscheidet man zwischen passiven und aktiven Transpondern. Passive Transponder entnehmen die benötigte Energie für die Informationsübertragung und die Ablaufsteuerung aus einem externen elektromagnetischen Feld. Dieses Feld wird durch die Lesestation (in der vorliegenden Anmeldung auch als Gegenstation bzw. Basisstation bezeichnet) erzeugt. Eine derartige Lesestation benötigt daher relativ viel Energie, ein Batteriebetrieb ist meist problematisch. Die Reichweite passiver Transponder beträgt in der Regel nur wenige Zentimeter.

Aktive Transponder haben eine eigene Energiequelle. Beispielsweise können aktive Transponder die benötigte Energie einer mitgeführten Batterie entnehmen. Aktive Transponder sind daher meist nicht so kompakt wie passive Transponder. Allerdings haben aktive Transponder gegenüber passiven Transponder andere Vorteile. Beispielsweise können aktive Transponder "intelligenter" sein (beispielsweise über eine eigene Zeitbasis verfügen). Zudem haben aktive Transponder üblicherweise eine deutlich größere Reichweite. Dies hat beispielsweise den Vorteil, dass die zugehörige Basisstation vandalismussicher in einem gesicherten Bereich angebracht werden. Auch kann die Basisstation, die mit einem aktiven Transponder kommunizieren soll, energieärmer, kleiner und kostengünstiger ausgestaltet sein als eine Lesestation für passive Transponder. Dies ist insbesondere vorteilhaft in der digitalen Schließtechnik, wo die Lesestationen in batteriebetriebene elektronische Schließzylinder oder Beschläge integriert sind.

Das erfindungsgemäße System ist mit einer Vielzahl unterschiedlicher drahtloser elektronischer Schlüssel und Transpondern realisierbar. Beispielsweise können fest programmierte drahtlose elektronische Schlüssel oder Transponder sich nur einmal mit der Identinformation beschreiben lassen (die sogenannte "Unique-ID"), bilden jedoch die kostengünstigste Variante. Programmierbare drahtlose elektronische Schlüssel oder Transponder erlauben ein Austauschen oder Überschreiben der gespeicherten Informationen. Die Kommunikation zur Programmierung erfolgt dabei in der Regel drahtgebunden oder drahtlos, vorzugsweise jedoch verschlüsselt.

Der erfindungsgemäße drahtlose elektronische Schlüssel ist vorzugsweise ein aktiver drahtloser elektronischer Schlüssel, d.h. er verfügt über eine eigene Energiequelle, beispielsweise in Form einer Batterie oder eines Akkumulators. Ein erfindungsgemäßer drahtloser elektronischer Schlüssel ist vorzugsweise so ausgebildet, dass die ausgesendeten Datensignale, die für die Feststellung der Anwesenheit des drahtlosen elektronischen Schlüssels innerhalb des Wirkkreises der Basisstation verwendet werden zu unregelmäßigen Zeitpunkten ausgesendet werden. Mit anderen Worten, erfindungsgemäß wird eine Folge von Datensignalen über eine gesamte Sendezeit zu unregelmäßigen Zeitpunkten ausgesendet. Hierbei ist zu beachten, dass die gesamte Sendezeit nicht die Zeit ist, während der aktiv gesendet wird, sondern die Zeit, während der einzelne Sendezeitpunkte ausgewählt werden.

D.h. während der gesamten Sendezeit wird nur vereinzelnd, nämlich zu den Sendezeitpunkten, aktiv ein Signal ausgesendet. Noch anders ausgedrückt kann eine Folge von Datensignalen so ausgesendet werden, dass zwischen den einzelnen Elementen (Datensignalen) der Folge unregelmäßige Zeitintervalle liegen. Zudem ist die Unregelmäßigkeit der Folge nicht nur zwischen einer endlichen Anzahl von Datensignalen gegeben, sondern vorzugsweise über einen langen Zeitraum, d.h., es ist bevorzugt, dass sich zeitliche Teilabschnitte der Folge nicht wiederholt werden. Vorzugsweise ist die erfindungsgemäße Unregelmäßigkeit im Sinne von zufällig zu verstehen, d.h., der Begriff "unregelmäßig" kann in einer bevorzugten Ausführungsform einfach durch den Begriff "zufällig" ersetzt werden.

Das erfindungsgemäße Verfahren kann vorzugsweise in zwei Phasen unterteilt werden: Eine primäre authentifizierungs Phase (Initialisierungsphase/Initialisierungsprozess) des drahtlosen elektronischen Schlüssels sowie die zweite Phase in der die Anwesenheit bzw. Nähe des drahtlosen elektronischen Schlüssels zum zu sichernden Objekt (vorzugsweise andauernd) überprüft wird (hier im Folgenden "Presence Check" genannt).

Mit der primären Authentifizierung des drahtlosen elektronischen Schlüssels an der Basisstation wird zunächst festgestellt, ob der drahtlose elektronische Schlüssels berechtigt ist, den Zugriff auf das zu schützende Objekt zu steuern bzw. zu regeln. Die primäre Authentifizierung erfolgt vorzugsweise innerhalb einer kurzen Zeitperiode, in der vorzugsweise die üblichen kryptografischen Verfahren verwendet werden können, um eine sichere Authentifizierung zu gewährleisten. Vorzugsweise kann die Authentifizierung des drahtlosen elektronischen Schlüssels in einem bidirektionalen Initialisierungsprozess zwischen der Basisstation und dem drahtlosen elektronischen Schlüssel erfolgen, wobei vorzugsweise ein Challenge-Response-Verfahren, vorzugsweise verschlüsselt abläuft.

Bei diesem Verfahren stellt die Basisstation oder der drahtlose elektronische Schlüssel eine Aufgabe (engl. challenge), die der andere (drahtlose elektronische Schlüssel oder Basisstation) lösen muss (engl. response), um zu beweisen, dass eine bestimmte Information bekannt ist. Anhand diese beispielhaften Authentifizierungsverfahrens erkennt man, dass eine Datenkommunikation zwischen dem drahtlosen elektronischen Schlüssel und der Basisstation stattfindet, bei der eine relativ große Datenmenge hin und her gesendet wird, um ein hohes Maß an Manipulationssicherheit zu gewährleisten.

Mit anderen Worten, es erfolgt eine im Vergleich zur zweiten Phase relativ energieaufwändige bidirektionale Kommunikation zwischen dem drahtlosen elektronischen Schlüssel und Basisstation in der aufgrund der Verwendung von kryptografischen Verfahren relativ viele Daten verschickt bzw. empfangen werden. Dieser erhöhte Energieaufwand ist jedoch auf eine kurze Zeitperiode begrenzt und daher aus Sicht der gesamten Energiebilanz geringfügig.

Die zweite Phase des erfindungsgemäßen Verfahrens bezieht sich auf eine beschränkte Wirkreichweite des drahtlosen elektronischen Schlüssels und wird im Folgenden auch als "Presence Check" bezeichnet. Sobald der Abstand zwischen der Basisstation und dem drahtlosen elektronischen Schlüssel eine vorgegebene, vorzugsweise einstellbare Signalreichweite überschreitet, wird die durch die Basisstation initiierte Handlung bzw. der initiierte Zustand wieder deaktiviert. So wird beispielsweise der Zugriff auf einen Computer verweigert, sobald sich ein Benutzer genügend weit vom Computer entfernt. Nähern sich der drahtlose elektronische Schlüssel und die Basisstation wieder aneinander an, so dass die Basisstation innerhalb der Signalreichweite liegt, kann die Freischaltung bzw. Handlung erneut ermöglicht werden. Beispielsweise ist ein Zugriff auf einen Computer wieder möglich, sobald sich ein Benutzer mit dem geeigneten drahtlosen elektronischen Schlüssel innerhalb des Wirkkreises der Basisstation befindet.

Die zweite Phase, d.h. die (vorzugsweise permanente) Überprüfung, ob sich der drahtlose elektronische Schlüssel in der Nähe bzw. in einem definierten Umfeld des zu schützenden Objektes befindet (im Folgenden auch "Presence check" genannt), ist im Vergleich zur ersten Phase deutlich länger, d.h., in der zweiten Phase sollte erfindungsgemäß der Energieverbrauch im Vergleich zur ersten Phase bzw. im Vergleich zu bekannten Verfahren deutlich reduziert werden, ohne jedoch die Sicherheit unangemessen zu reduzieren.

Im Stand der Technik kann das zu schützende Objekt die Anwesenheit eines aktiven Transponders nur feststellen, während der aktive Transponder permanent in regelmäßigen Intervallen seine Anwesenheit signalisiert. Um Manipulationssicherheit zu gewährleisten, werden üblicherweise Verschlüsselungsverfahren verwendet, die relativ große Datensignale austauschen, d.h. der aktive Transponder sendet regelmäßig große Datenmengen, was einen hohen Energiebedarf bedingt. Zudem wird im Stand der Technik der Zeitraum zwischen den ausgesendeten Datensignalen sehr gering gehalten, da das System genau in dem kurzen Zwischenzeitraum manipuliert werden könnte. Eine Möglichkeit den Energieverbrauch zu reduzieren wird im Stand der Technik beispielsweise dadurch gelöst, dass die Sendepausen verlängert werden. Dadurch wird jedoch die Sicherheit des Systems reduziert. Eine weitere Möglichkeit den Energieverbrauch zu reduzieren, liegt in der Reduzierung der ausgesendeten Datenmenge, was jedoch auch zu einer Sicherheitsreduktion führen kann.

Ein bevorzugtes Merkmal der vorliegenden Erfindung zur Reduzierung des Energiebedarfs (Verlängerung der Lebensdauer) des (aktiven) drahtlosen elektronischen Schlüssels liegt in der Reduzierung der kumulierten aktiven Sendedauer und somit der kumulierten Datenmenge über den gesamten Zeitraum, in dem überprüft wird, ob der drahtlose elektronische Schlüssel sich in der definierten Umgebung des Objektes befindet. Insbesondere kann die Datenmenge die pro Intervall ausgesendet wird erfindungsgemäß dadurch reduziert werden, dass die damit einhergehende Reduzierung der Manipulationssicherheit durch ein unregelmäßiges Aussenden der Datensignale kompensiert werden kann. Mit anderen Worten, dadurch dass die Zeitpunkte des unregelmäßigen Aussendens der Datensignale vorzugsweise nur dem drahtlosen elektronischen Schlüssel und der Basisstation bekannt sind, stellen diese unregelmäßigen Zeitpunkte ein Sicherungsmerkmal gegen Manipulationen dar, wodurch die ausgesendeten Datenmengen selbst reduziert werden können. Erfindungsgemäß wird der Energiebedarf des drahtlosen elektronischen Schlüssels gegenüber einem bekannten System bei einer gleichen Sicherheitsstufe deutlich reduziert. Das erfindungsgemäße Verfahren und System sind besonders geeignet für Fälle, in denen die Anwesenheit des drahtlosen elektronischen Schlüssels innerhalb eines definierten Umkreise um das zu sichernde Objekt einen Zugriff auf das Objekt zulassen soll und die Abwesenheit des drahtlosen elektronischen Schlüssels innerhalb des Umkreisen den Zugriff auf das Objekt verbieten soll (Presence Check). Insbesondere wird in diesen Fällen mit dem erfindungsgemäßen Verfahren mit zunehmender Zeitdauer der Anwesenheit die Sicherheit des Systems weiter erhöht, so dass es für einen potentiellen Angreifer mit der Dauer immer unwahrscheinlicher wird, die einzelnen Zeitpunkte richtig zu erraten. Insbesondere sind die Wahrscheinlichkeiten die richtigen Zeitpunkte für die einzelnen Datensignale richtig zu erraten miteinander zu multiplizieren, wodurch sich die Wahrscheinlichkeit alle Zeitpunkte richtig zu erraten kontinuierlich mit der Zeit verringert. Insbesondere ist es erfindungsgemäß daher besonders vorteilhaft, das Verfahren für solche Zwecke einzusetzen, bei denen die Anwesenheit länger als ein kurzes singuläres Ereignis ist. Die vorliegende Erfindung kann dennoch auf für singuläre Ereignisse, beispielsweise für das automatische Aufschließen einer Tür verwendet werden.

Erfindungsgemäß kann die Datenmenge und somit die aktive Sendedauer (kumulativ und/oder pro Sendeintervall) des drahtlosen elektronischen Schlüssels dahingehend reduziert werden, dass der drahtlose elektronische Schlüssel nicht mehr zu regelmäßigen Zeitpunkten bzw. in regelmäßigen Intervallen sendet, sondern zu speziellen Zeitpunkten bzw. in unregelmäßigen Intervallen, Signale zu dem zu schützenden Objekt (d.h. zur Basisstation) sendet.

Erfindungsgemäß sind die Basisstation und der drahtlose elektronische Schlüssel so ausgebildet, dass im Initialisierungsprozess zwischen Basisstation und drahtlosem elektronischen Schlüssel die Folge der unregelmäßigen Zeitpunkte, bzw. Zeitintervalle vereinbart wird, oder eine Grundlage zur Generierung dieser unregelmäßigen Zeitpunkte, bzw. Zeitintervalle vereinbart wird. Somit kann erreicht werden, dass nur dem drahtlosen elektronischen Schlüssel und der Basisstation die genauen Zeitpunkte bzw. Intervalle bekannt sind. Dies kann beispielsweise in der primären Phase geschehen. Gemäß einer bevorzugten Ausführungsform kann die Größe der auszutauschenden Daten eingestellt werden. Zum Beispiel kann die Größe in Hinblick auf das Signal/Rauschverhältnis einstellbar sein. So kann die Basisstation mit einem ersten Transponder vereinbaren, dass die auszutauschenden Datenpakete kürzer (kleiner) sind als die Datenpakete die von einem zweiten Transponder ausgesendet werden müssen. Zudem können vorzugsweise auch die Basisstation und/oder der Transponder eine Gültigkeitsdauer aushandeln. D.h., nach dieser Gültigkeitsdauer muss sich der Benutzer des elektronischen Schlüssels aktiv identifizieren, wodurch beispielsweise ein wirksamer Schutz gegen Diebstahl erreicht werden kann. Diese aktive Identifizierung kann entweder auf der Basisstation geschehen, beispielsweise durch Eingabe eines Passcodes oder einer PIN und/oder auf der Transponderseite, beispielsweise durch Eingabe eines Passcodes oder einer PIN.

Neben einem Anpassen der Länge der auszusendenden Datenpakete kann es zudem vorteilhaft sein, wenn die Intervalllänge (siehe Ix in der detaillierten Diskussion unten) während der Primärphase ausgehandelt wird. Durch Einstellen der Intervalllänge kann die Reaktionszeit und der Energieverbrauch des Transponders auf ein gewünschtes Maß eingestellt werden.

Alternativ oder zusätzlich können die Zeitpunkte bzw. Intervalle in dem drahtlosen elektronischen Schlüssel und/oder der Basisstation gespeichert sein. Die gespeicherten Zeitpunkte bzw. Intervalle können fest gespeichert sein und/oder veränderlich gespeichert werden. Beispielsweise könnte der drahtlose elektronische Schlüssel und/oder die Basisstation mittels Computer entsprechend programmiert werden. Alternativ oder zusätzlich können die Zeitpunkte bzw. Intervalle basierend auf einem gemeinsamen Algorithmus mit einem gemeinsamen Startwert berechnet werden, wobei vorzugsweise nur die entsprechende(n) Basisstation(en) und der/die entsprechende(n) drahtlosen elektronischen Schlüssel den gemeinsamen Algorithmus und/oder den gemeinsamen Startwert kennen.

Gemäß einer bevorzugen Ausführungsform werden die Zeitpunkte (bzw. Intervalle zwischen den Zeitpunkten) mit Hilfe eines (Pseudo-)Zufallsgenerators berechnet. Ein Zufallsgenerator (oft auch als Zufallszahlengenerator bezeichnet) erzeugt eine Reihe bzw. Folge von Zufallszahlen. Der Bereich, aus dem die Zufallszahlen erzeugt werden, hängt dabei vom speziellen Zufallszahlengenerator ab. Es kann beispielsweise die Menge aller 32-Bit-Zahlen oder auch die Menge der reellen Zahlen im Intervall [0,1] sein.

Grundsätzlich wird zwischen nicht-deterministischen und deterministischen Zufallszahlengeneratoren unterschieden. Nicht-deterministisch ist ein Zufallszahlengenerator dann, wenn er auch bei gleichen Ausgangsbedingungen unterschiedliche Werte liefert. Da die Implementierung einer Software-Prozedur immer deterministisch arbeitet, muss zur Realisierung eines nicht-deterministischen Zufallszahlengenerators ein externer, beispielsweise ein physikalischer, Vorgang einbezogen werden. Ein deterministischer Zufallszahlengenerator liefert bei gleichen Ausgangsbedingungen dagegen immer die gleiche Folge von Zahlen. Oft werden beide Formen zu einem hybriden Generator kombiniert.

Deterministische Zufallszahlengeneratoren erzeugen Pseudozufallszahlen und werden daher in der Regel Pseudozufallszahlengeneratoren genannt. Vorzugsweise handeln die Basisstation und der drahtlose elektronische Schlüssel einen Startwert aus, der dann die Basis für alle nachfolgenden berechneten Zeitintervalle bildet. Mit anderen Worten, der Pseudozufallszahlengenerator in der Basisstation und im drahtlosen elektronischen Schlüssel generieren die gleiche Zahlenfolge von Pseudozufallszahlen, die prinzipiell beliebig lang sein kann ohne dass sich die Zahlenreihenfolge wiederholt. Somit wird es einem Angreifer auch nicht möglich einen Datenverkehr aufzuzeichnen und bei Übereinstimmung einer kleinen Teilfolge auf die Gesamtreihenfolge bzw. eine Teilfolge zu schließen. Bei jedem Start der Zufallszahlenberechnung mit gleichem Startwert, der so genannten Saat (engl. seed), wird die gleiche pseudozufällige Zahlenfolge erzeugt. Erfindungsgemäß kann dieser "seed" beispielsweise in der Primärphase ausgehandelt bzw. bestimmt werden. Zur Generierung des "seed" kann beispielsweise mindestens ein externer Vorgang (beispielsweise die aktuelle Uhrzeit) dienen oder eine Eingabe eines Benutzers wodurch zusätzlich sichergestellt werden kann, dass nur der eine Benutzer für diese eine initialisierte Sitzung Zugriff erhält. Auch können bestimmte Parameter des Algorithmus, der der Basisstation und dem drahtlosen elektronischen Schlüssel bekannt ist, so generiert bzw. ausgehandelt werden.

Somit wird erreicht, dass nur die Basisstation und der drahtlose elektronische Schlüssel die Zeitpunkte (Intervalle) kennen, an denen ein Signal vom drahtlosen elektronischen Schlüssel gesendet werden muss (Sendezeitpunkt) und entsprechend von der Basisstation empfangen werden muss (Empfangszeitpunkt), um Zugriff auf das Objekt zu gewähren. Sobald die Basisstation zu mindestens einem Zeitpunkt bzw. innerhalb eines zu erwartenden Intervalls (das um den erwarteten Empfangszeitpunkt) kein Signal empfängt wird der Zugriff verweigert bzw. gesperrt. Abhängig von der Sicherheitsstufe, der ausgesendeten Signalstärke und/oder vorhandener Störsignale, kann mit Hilfe eines Bewertungsfilters in der Basisstation gewichtet bzw. bewertet werden, ob ein Zugriff erlaubt ist oder nicht. Beispielsweise kann in dem Bewertungsfilter eine Filterfunktion implementiert sein, die empfangene und/oder nichtempfangene Datensignale gewichtet und die einzelnen Gewichte kombiniert, wobei ab überschreiten eines Schwellwertes der Zugriff auf das Objekt verweigert wird. Als einfach zu realisierende Filterfunktion kann beispielsweise die Anzahl der verfehlten Zeitpunkte an denen kein Signal empfangen wurde eingestellt werden, und ein Zugriff verweigert werden, wenn ein Schwellwert (beispielsweise fünf) von nicht empfangenen Datensignalen überschritten wird. Zudem ist es vorteilhaft, wenn die Zeitpunkte innerhalb einer vorbestimmten oder einstellbaren Toleranz noch als rechtzeitig empfangen gewertet werden. Diese Gewichte und/oder der Schwellenwert bzw. Schwellenwerte können fest im System eingestellt sein oder während der Primärphase zwischen der Basisstation und dem drahtlosen Schlüssel ausgehandelt werden. Basierend auf diesem Beispiel wird somit deutlich, dass die erfindungsgemäße Unterteilung in Primärphase und Sekundärphase einen hohen Grad an Anpassungsmöglichkeiten zulässt, wodurch ein individuell einstellbares System und Verfahren realisiert werden kann, abhängig von der gewünschten Sicherheitsstufe.

Der drahtlose elektronische Schlüssel hat daher nur bei der Authentifizierung in der ersten Phase, die beispielsweise zusätzlich mittels PIN, Passwort und/oder Biometrie abgesichert werden kann (Aktivierung), einen höheren Energieverbrauch. Vorzugsweise ist das erfindungsgemäße System derart ausgebildet, dass der drahtlose elektronische Schlüssel erst "aktiviert" werden muss, um sicherzustellen, dass der drahtlose elektronische Schlüssel von einer berechtigten Person verwendet wird, was einen zusätzlichen Schutz gegen Diebstahl verschafft. Beispielsweise kann der drahtlose elektronische Schlüssel für einen vom berechtigten Benutzer wählbaren Zeitraum aktiviert werden. In diesem Zeitraum kann der erfindungsgemäße drahtlose elektronische Schlüssel mit der Basisstation (Gegenstation), beispielsweise einem zu schützenden Computer kommunizieren. Gemäß einer bevorzugten Ausführungsform muss sich der Berechtigte erneut (beispielsweise per Fingerabdruck) am drahtlosen elektronischen Schlüssel identifizieren, sobald der Aktivierungszeitraum abgelaufen ist.

In einer weiteren bevorzugten Ausführungsform kann der drahtlose elektronische Schlüssel von der Basisstation eine Rückantwort verlangen, so dass der drahtlose elektronische Schlüssel selbst feststellen kann, ob er sich noch in der Nähe (im Wirkkreis bzw. Umkreis) der Basisstation befindet oder nicht. Erhält der drahtlose elektronische Schlüssel für eine bestimmte Zeit von der Basisstation keine Rückantwort mehr, so kann der drahtlose elektronische Schlüssel weiter Energie einsparen, indem ein Aussenden von Signalen abgestellt wird. Vorzugsweise werden die Rückantworten von der Basisstation deutlich seltener an den drahtlosen elektronischen Schlüssel geschickt als die Datensignale vom drahtlosen elektronischen Schlüssel zur Basisstation.

Aufgrund äußerer Störeinflüsse kann ein vom drahtlosen elektronischen Schlüssel zu einem richtigen Zeitpunkt ausgesendetes Datensignal jedoch nicht bei der Basisstation ankommen bzw. ein Störimpuls, zu einem anderen Zeitpunkt fälschlicherweise als Datensignal interpretiert werden. Um die Störunempfindlichkeit zu verbessern, kann die Basisstation vorzugsweise eine bestimmte Anzahl falsch empfangener Datensignale pro Zeiteinheit auf Kosten der Reaktionszeit/Manipulationssicherheit tolerieren. Wird beispielsweise die Anzahl falsch empfangener Datensignale pro Zeiteinheit erhöht, so erhöht sich auch der Zeitraum der Reaktionszeit, d.h., erst nachdem die bestimmte Anzahl verstrichen ist, kann das System reagieren. Die Anzahl falsch empfangener Datensignale kann in Abhängigkeit von den Gegebenheiten (was ist wie sicher zu schützen; welche Frequenzen werden verwendet; wie viel Energie steht zur Verfügung usw.) individuell angepasst werden. Vorzugsweise wird diese Anzahl bereits bei der Herstellung fest im drahtlosen elektronischen Schlüssel und/oder in der Basisstation implementiert, kann jedoch gemäß anderen Ausführungsformen zusätzlich oder alternativ auch nachträglich verändert bzw. festgelegt werden. Gemäß einer weiteren erfindungsgemäßen Ausführungsform kann diese bestimmte Anzahl auch adaptiv während des laufenden Betriebs an die Gegebenheiten angepasst werden. Es sollte jedoch beachtet werden, dass es sich bei dem eben beschriebenen Beispiel nur um eine spezielle Filterfunktion handelt und die erfindungsgemäße Basisstation nicht auf diese Filterfunktion beschränkt ist und viele weitere oder andere Realisierungen implementiert werden können.

Vorzugsweise sind die Datensignale, die in den unregelmäßigen Zeitintervallen gesendet/empfangen werden, im Wesentlichen immer dieselben Datensignale. Die Länge (in Bit angegeben) und/oder die Intensität der ausgesendeten Datensignale wird vorzugsweise in Relation zu einem vorhandenen Störspektrum gewählt. Im Wesentlichen dieselben Datensignale bedeutet hier beispielsweise, dass genau die gleichen Datensignale ausgesendet werden bzw. eine kleine Anzahl unterschiedlicher Signale gesendet werden, die im Empfänger durch Korrelation extrahiert werden können. Beispielsweise können unterschiedliche Datensignale, basierend auf der ersten Pseudozufallszahlenfolge und/oder einer zweiten Pseudozufallskomponente berechnet werden. Aufgrund der Energiebilanz ist es jedoch vorteilhaft, wenn die Länge bzw. Größe der ausgesendeten Datensignale sehr gering bzw. kurz ist. Entsprechend kann die zweite Zufallsreihe auf einen kleineren Wertebereich eingeschränkt sein als die erste Zufallsreihe. So könnte es beispielsweise ausreichend sein wenn ein Signal mit 3 Bits übermittelt wird, wobei dann die folgenden Bit-Konstellationen zufällig, jedoch sowohl in der Basisstation als auch dem Transponder gleich, berechnet werden: 000, 001, 010, 011, 100, 101, 111. Die Erfindung ist jedoch nicht auf ein Signal mit einer 3 Bit Länge beschränkt, sondern kann entsprechend der gewünschten Sicherheitsstufe individuell angepasst werden. Diese individuelle Anpassung geschieht vorzugsweise in der Primärphase, kann jedoch vorzugsweise auch während des laufenden Betriebs angepasst werden.

Um eine definierte Reichweite der drahtlosen Verbindung zwischen drahtlosem elektronischen Schlüssel und Basisstation zu erreichen, kann die Datenübertragung vorzugsweise im Wesentlichen über eine induktive Kopplung erfolgen, da hier im Vergleich zur Funkübertragung die Intensität mit höherer Ordnung über der Entfernung abfällt.

Die drahtlose Kommunikation zwischen dem drahtlosen elektronischen Schlüssel und der Basisstation kann in beliebiger Art oder Frequenz, die für den Einsatzzweck geeignet sind, erfolgen, beispielsweise Niederfrequenz (NF, z.B. 25 kHz mit magnetischer Induktion), Radio-Frequenz (RFID, z.B. 13,56 MHz) oder Hochfrequenz (z.B. 868 MHz, 915 MHz, 2,4 GHz oder höher). Unter dem Begriff "Kommunikation" soll in diesem Zusammenhang jegliche Form eines Datenaustausches verstanden werden, und diese kann entweder verschlüsselt oder unverschlüsselt und entweder unidirektional oder bidirektional erfolgen. Der Fachmann wird je nach den gewünschten Eigenschaften des Systems, z.B. Optimierung der Signalreichweite, Übertragungsgeschwindigkeit, Batteriehaltbarkeit, Kosten oder Anfälligkeit gegen externe elektromagnetische Störungen oder andere Kriterien, den geeigneten Ansatz und die geeignete Kombination wählen. Auch kann nur der drahtlose elektronische Schlüssel oder der drahtlose elektronische Schlüssel und die Basisstation über eine eigene Energieversorgung verfügen. Diese Energieversorgung kann entweder eine Batterie, einen Akkumulator (Akku), eine Brennstoffzelle, eine Piezozelle, eine Solarzelle oder Kombinationen daraus umfassen.

Der Energieverbrauch eines erfindungsgemäßen drahtlosen elektronischen Schlüssels kann zusätzlich noch verringert werden, indem der drahtlose elektronische Schlüssel im Wesentlichen nur Datensignale zur Basisstation aussendet, wenn die Basisstation grundsätzlich in der Lage ist, diese Datensignale auch zu empfangen. Das heißt, wenn sich der drahtlose elektronische Schlüssel weit außerhalb des Wirkkreises der Basisstation befindet und es aufgrund der Entfernung zur Basisstation unmöglich ist, dass diese ausgesendete Datensignale empfangen kann, ist es unerwünscht, dass der drahtlose elektronische Schlüssel über eine längere Zeit weiter Datensignale aussendet. Zudem ist es unerwünscht Datensignale auszusenden wenn die Basisstation aus anderen Gründen nicht "erreichbar" ist, beispielsweise wenn die Basisstation ausgeschaltet ist. Erfindungsgemäß kann ein solcher Zustand auf der Seite des drahtlosen elektronischen Schlüssels dadurch festgestellt werden, dass der drahtlose elektronische Schlüssel ausgebildet ist, zusätzlich zu den mehreren unregelmäßigen ersten Zeitpunkten in regelmäßigen oder unregelmäßigen zweiten Zeitpunkten/Zeitintervallen nach Signalen der Basisstation zu horchen, wobei in Abhängigkeit von deren Präsenz das weitere Aussenden in den unregelmäßigen ersten Zeitintervallen fortgeführt wird oder nicht. Wird beispielsweise am drahtlosen elektronischen Schlüssel kein Signal mehr von der Basisstation empfangen, so kann sich der drahtlose elektronische Schlüssel beispielsweise außerhalb des Wirkkreises befinden oder die Basisstation kann ausgeschaltet sein.

Ein wesentlicher Grundgedanke der vorliegenden Erfindung ist das Aussenden der Datensignale zu unregelmäßigen Zeitpunkten. Im Gegensatz zum erfindungsgemäßen System werden im Stand der Technik die Datensignale zu festen zeitlichen Abständen, d.h. in regelmäßigen Abständen, wiederholt. Erfindungsgemäß wird ein Zeitstrahl in regelmäßige Intervalle, d.h. sich wiederholende aneinandergereihte Zeitabschnitte, einer gleichen Länge eingeteilt. Erfindungsgemäß werden die unregelmäßigen Zeitpunkte zum Aussenden der Signale dadurch erreicht, dass die Zeitpunkte innerhalb dieser regelmäßigen Intervalle zufällig bzw. pseudozufällig verteilt sind. Mit anderen Worten, der Offsetzeitpunkt des gesendeten Datensignals vom Anfangszeitpunkt eines regelmäßigen Intervalls ist zufällig verteilt. Gemäß einer anderen, nicht beanspruchten Ausführungsform kann alternativ oder zusätzlich auch die Einteilung in die Intervalle bereits zufällig verteilt sein.

Zudem sollte beachtet werden, dass der Begriff des Zeitpunktes, bzw. die Begriffe Sende- und Empfangszeitpunkt vorzugsweise nicht als mathematische Punkte zu verstehen sind. Mit anderen Worten, die Begriffe "Punkte" im Zusammenhang mit dem Senden und Empfangen sollen endliche (kleine) Zeiträume, Zeitintervalle bzw. Zeitspannen darstellen.

### KURZE BESCHREIBUNG DER ZEICHNUNGEN

Im Folgenden werden bevorzugte Ausführungsformen der vorliegenden Erfindung unter Bezugnahme auf die Figuren ausführlich beschrieben. Es zeigen:
- Fig. 1: ein Laptop das eine erfindungsgemäße Basisstation in Form eines USB-Dongles aufweist und Zugriff auf das Laptop erlaubt in Abhängigkeit davon, ob sich der drahtlose elektronische Schlüssel innerhalb des Umkreises befindet;
- Fig. 2: einen Zeitstrahl, der unregelmäßige verteilte Sendezeitpunkte zeigt; und
- Fig. 3: einen Zeitstrahl wie in Fig. 2, bei dem die unregelmäßig verteilten Sendezeitpunkte innerhalb gleichmäßiger Intervalle unregelmäßig verteilt sind.

### DETAILLIERTE BESCHREIBUNG BEVORZUGTER AUSFÜHRUNGSFORMEN

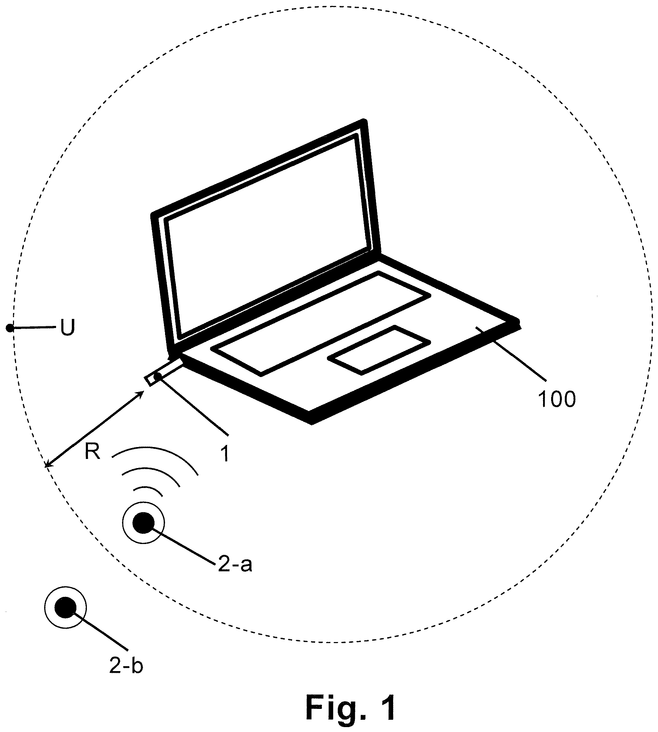

Figur 1 zeigt ein erfindungsgemäßes System zum Absichern eines Laptops 100. Gemäß der dargestellten Variante wird die Basisstation in Form eines USB-Dongles 1 bereitgestellt, die mit dem drahtlosen elektronischen Schlüssel (hier ein Transponder) 2 kommunizieren kann. Der USB-Dongle regelt, ob ein Benutzer auf das Laptop Zugriff hat oder nicht. Gemäß einer weiteren bevorzugten Ausführungsform kann der Zugriff auch sehr dediziert für bestimmte Programme gesteuert werden.

In einer primären Authentifizierungsphase kommuniziert der drahtlose elektronische Schlüssel 2 mit der Basisstation 1, um festzustellen, ob der drahtlose elektronische Schlüssel 2 berechtigt ist, den Zugriff auf das zu schützende Objekt mit Hilfe der Basisstation zu steuern bzw. zu regeln. Die primäre Authentifizierung erfolgt vorzugsweise innerhalb einer kurzen Zeitperiode, in der vorzugsweise ein Challenge-Response-Verfahren verwendet wird. Beispielsweise leitet ein Benutzer diese primäre Authentifizierungsphase durch Drücken einer Taste am drahtlosen elektronischen Schlüssel ein.

In dieser primären Authentifizierungsphase kann neben der Überprüfung einer Berechtigung des drahtlosen elektronischen Schlüssels auch ein "seed" für das Generieren von Pseudozufallszahlen ausgehandelt werden, wobei nur der drahtlose elektronische Schlüssel und die Basisstation diesen seed kennen. Um dies sicherzustellen erfolgt das Aushandeln des seeds vorzugsweise über eine verschlüsselte Kommunikation zwischen drahtlosem elektronischen Schlüssel und Basisstation.

Basierend auf diesem ausgehandelten seed, sind nun die Basisstation und der drahtlose elektronische Schlüssel in der Lage, die gleiche Reihe von Zufallszahlen zu erzeugen.

In der an die primäre Authentifizierungsphase anschließenden zweiten Phase (dem "Presence Check") wird nun vorzugsweise fortlaufend überprüft, ob sich der drahtlose elektronische Schlüssel in der Nähe der Basisstation 1 befindet. Da der drahtlose elektronische Schlüssel 2 vorzugsweise batteriebetrieben ist und zudem möglichst energiesparsam betrieben werden sollte, ergibt sich aufgrund der aufgewendeten Sendeleistung eine definierte Sendereichweite innerhalb derer ein ausgesendetes Signal von der Basisstation 1 noch mit ausreichender Stärke empfangen werden kann. Im Wesentlichen kommt es auf die relative Entfernung zwischen dem drahtlosen elektronischen Schlüssel und Basisstation an. Aus Übersichtlichkeitsgründen wurde diese Entfernung "R" als Umfeld "U" nicht um den drahtlosen elektronischen Schlüssel herum, sondern um die Basisstation 1 (hier nur schematisch, da nicht direkt im Mittelpunkt) herum eingezeichnet. Mit anderen Worten, wenn sich der drahtlose elektronische Schlüssel 2 in der Position 2-a befindet, d.h. innerhalb des Umfeldes bzw. des Wirkkreises "U", dann ist ein Zugriff auf das Laptop erlaubt. Befindet sich der drahtlose elektronische Schlüssel in der Position 2-b, d.h. außerhalb des Wirkkreises "U", dann wird der Zugriff auf den Laptop 100 verboten, beispielsweise wird der Bildschirm schwarz und die Tastatur "gesperrt".

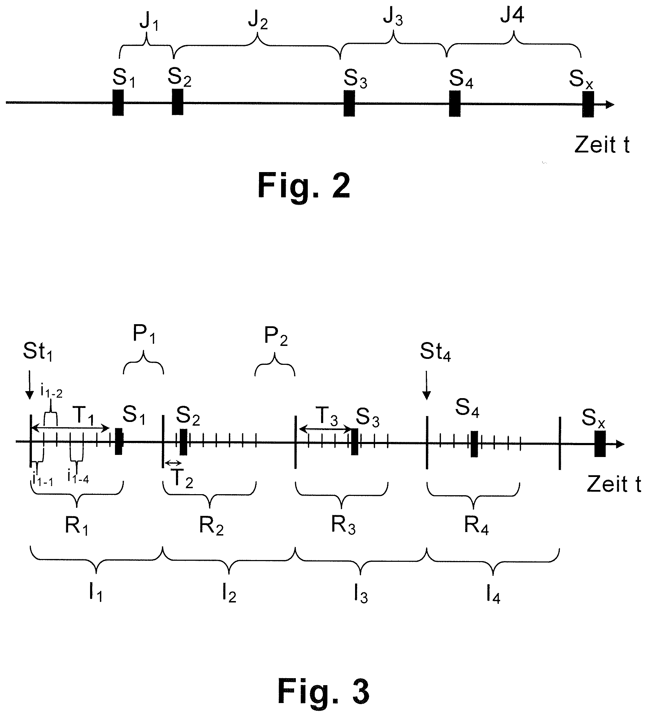

Die Basisstation sollte erfindungsgemäß die Anwesenheit des drahtlosen elektronischen Schlüssels dauerhaft überprüfen. Anderseits sollte aus Energiegründen der drahtlose elektronische Schlüssel möglichst selten nur für möglichst kurze Zeit Signale aussenden. Angenommen, es wird nur ca. jede Minute ein Signal ausgesendet, d.h. die Intervalle sind verhältnismäßig lange, dann kann es vorkommen, dass die Basisstation für annähernd eine Minute noch Zugriffe auf das Laptop erlaubt, obwohl sich der drahtlose elektronische Schlüssel außerhalb des Wirkkreises befindet. Die Sicherheit des Systems hängt somit von der Länge der Intervalle zwischen den Sendezeitpunkten ab. Ohne darauf beschränkt zu sein wird im Folgenden beispielhaft angenommen, dass erfindungsgemäß zumindest innerhalb von Sekundenintervallen (in Fig. 3 dargestellt als "längere" senkrechte Striche) zumindest ein Datensignal (in Fig. 3 dargestellt als schwarze breitere Balken; Signalblöcke zu den Zeitpunkten S₁, S₂, , allgemein Sx...) vom drahtlosen elektronischen Schlüssel zur Basisstation 2 ausgesendet wird. Erfindungsgemäß sollte die Zeitdauer der ausgesendeten Signaldaten S₁, S₂, ... vorzugsweise möglichst kurz sein. In Fig. 3 wird diese kürzere Zeitdauer beispielsweise durch die Breite der Balken bei S₁, S₂, ... dargestellt. In diesem Beispiel sind die Signallänge bzw. die Dauer aufeinanderfolgender ausgesendeter Datensignale S₁, S₂, ... konstant (die Balken sind gleich breit gezeichnet). Die Wahl der Zeitdauer der ausgesendeten Signaldaten bzw. die Wahl der Bitlänge der Informationen die pro Signaldaten ausgesendet werden sollen, hängt von einer Vielzahl von Faktoren ab. Allgemein gilt die Regel, dass die Bitlänge möglichst kurz sein soll, um die Energie, die zur Ausstrahlung der Datensignale notwendig ist, klein zu halten. Jedoch spielen auch Faktoren wie Wirkungsgrand des drahtlosen elektronischen Schlüssels, Vorhandensein äußerer Störfelder, verwendete Frequenz und Bandbreite des drahtlosen elektronischen Schlüssels, um nur wenige Faktoren zu nennen, eine Rolle die bei der Auswahl der Länge der Datensignale und der Länge der Intervalle zu berücksichtigen sind.

Gemäß der Erfindung wird die gesamte Sendezeit in gleich große (gleiche Dauer) Intervalle I₁, I₂, ... eingeteilt (in Fig. 3 dargestellt als "längere" senkrechte Striche). Dies kann für Implementations- bzw. Synchronisationszwecke zwischen dem drahtlosen elektronischen Schlüsselsund der Basisstation vorteilhaft sein.

Innerhalb dieser gleichen Intervalle I₁, I₂, sind die Zeitpunkte zu denen aufeinander folgende Datensignale S₁, S₂, ... ausgesendet werden unregelmäßig verteilt. Zudem kann es vorteilhaft sein, die Datensignale nicht über das jeweilige gesamte Intervalle Iₓ, zu verteilen, sondern nur innerhalb von Zeiträumen Rₓ mit Rₓ < Iₓ. Damit kann beispielsweise erreicht werden, dass in den Zeiträumen Pₓ = Iₓ - Rₓ der Sender (drahtloser Schlüssel) bzw. der Empfänger (Basisstation) ein Zeitraum eingeräumt wird, in dem andere Aufgaben abgearbeitet werden können oder einfach als Pause dienen. Es sollte zudem beachtet werden, dass die Pausen Px in Fig. 3 beispielhaft nur am Ende dargestellt sind und die vorliegende Erfindung nicht darauf beschränkt ist, d.h. es können auch Pausen (zusätzlich oder anstelle) am Anfang der Intervalle eingefügt werden. Vorzugsweise ist der bestimmte Zeitraum Rx deutlich länger (vorzugsweise mindestens Faktor 10 länger ist, vorzugsweise Faktor 100 länger) als das durch das Modulationsverfahren vorgegebene Subintervall.

Die Unregelmäßigkeit der Sendezeitpunkte Sx ist in den Figuren 2 und 3 dargestellt. Aus Fig. 2 wird beispielsweise ersichtlich, dass die Intervalle J₁, J₂, ... zwischen den unregelmäßigen Sendezeitpunkten ebenfalls unregelmäßig lang sind. In Fig. 3 wird diese Unregelmäßigkeit der Sendezeitpunkte Sx in Bezug auf die Intervalle I₁, I₂, ... und oder in Bezug auf die Zeiträume R₁, R₂, ... ersichtlich. Mit anderen Worten, der Offsetzeitpunkt (kurz: Offset) vom Anfang des jeweiligen Intervalls I₁, I₂, ... (bzw. vom Anfang des jeweiligen Zeitraums R₁, R₂, ...) bis zum Zeitpunkt des Aussendens der Datensignale S₁, S₂, ... (in Fig. 3 als T₁, T₂, ... dargestellt) ist erfindungsgemäß unregelmäßig, basierend auf Pseudozufallszahlen. Im dargestellten Beispiel ist T₁≠T₂; T₂≠T₃; T₃≠T₄. Diese Ungleichheit ist jedoch keine notwendige Vorraussetzung. Unregelmäßige Zeitpunkte/Intervalle im Sinne der vorliegenden Anmeldung schließt jedoch aus, dass T₁ = T₂ = T₃ = T₄ = ... = Tₓ gilt. Vorzugsweise basieren die Zeitpunkte Tx aufeinander ausgesendeter Datensignale auf Pseudozufallszahlen, wobei sich die Pseudozufallszahlen für einen Außenstehenden - der den Algorithmus und den Startwert nicht kennt - als Zufallszahlen darstellen.

Mit anderen Worten, eine erfindungsgemäße Unregelmäßigkeit kann auch wie folgt erreicht bzw. beschrieben werden: Man unterteilt die gesamte Sendezeit in aufeinanderfolgende Zeitintervalle gleicher Länge I₁, I₂, ... ein (siehe Fig. 3). Jedes der Zeitintervalle I₁, I₂, ... kann wiederum in eine Anzahl gleicher Unterintervalle iₓ₋₁, iₓ₋₂, ..., i_{x-y} eingeteilt werden. In Figur 3 wird beispielsweise jedes der Intervalle I₁, I₂, ...in zehn Unterintervalle (Subintervalle) eingeteilt, d.h., Intervall I₁ wird in die zehn Unterintervalle i₁₋₁, i₁₋₂, ..., i₁₋₁₀ eingeteilt. Die Datensignale S₁, ... können innerhalb eines Unterintervalls iₓ₋₁, iₓ₋₂, ..., i_{x-y} ausgesendet werden. Mit anderen Worten, nach jeder "Zeitscheibe" I₁, I₂, ... springt der drahtlose elektronische Schlüssel bei der Auswahl des jeweiligen Unterintervalls pseudozufällig zwischen diesen Unterintervallen herum. Sowohl der drahtlose elektronische Schlüssel als auch die entsprechende Basisstation kennen die pseudo-zufällige Sende/Empfangssequenz. Dieses Springen hat den Vorteil, dass ein etwaiger Angreifer diese Sequenz (Folge) nicht kennt und auch nicht wissen kann, wann die Basisstation ein Signal erwartet.

Ein Angreifer könnt nun in jedem Unterintervall iₓ₋₁, iₓ₋₂, ..., i_{x-y} ein Signal S aussenden. Ein solcher Angriff kann beispielsweise jedoch dadurch verhindert werden, dass die Basisstation nur zu den bestimmten unregelmäßigen Zeitpunkten (Empfangszeitpunkten) ein Signal erwartet und zu den anderen Zeitpunkten eben kein derartiges Signal empfangen darf. Allgemein ist es erfindungsgemäß vorteilhaft, empfangene Signale in Abhängigkeit des Empfangszeitpunktes zu werten/gewichten und basierend auf dieser Wertung/Gewichtung zu entscheiden, ob zum "richtigen" Zeitpunkt ein Signal empfangen wurde und zu den falschen Zeitpunkten nicht. So kann beispielsweise ein Punkt vergeben werden, wenn ein Signal unmittelbar vor bzw. unmittelbar nach dem eigentlichen Unterintervall empfangen wird. Wird ein Signal beispielsweise zwei Unterintervall vor bzw. nach dem eigentlichen Unterintervall empfangen, so könnte beispielsweise zwei Punkte vergeben werden, d.h., es findet eine Gewichtung statt, wie sehr der Empfangszeitpunkt vom eigentlichen (d.h. berechneten bzw. vor-gespeicherten) Empfangszeitpunkt abweicht. Ab erreichen einer bestimmten Schwelle, beispielsweise ab erreichen von 10 Punkten wird festgelegt, dass der Zugriff nicht mehr möglich ist. Zudem kann es vorteilhaft sein, dass diese Punkte (Gewichtungsfaktoren) sich nicht kontinuierlich addieren, sondern sich wieder abbauen bzw. verringern, wenn in einer Folgen (d.h. mehreren) von Unterintervallen Signale zu den eigentlichen Empfangszeitpunkten empfangen werden. So ist es denkbar, dass ein zu einem erwarteten Zeitpunkt empfangenes Signal einen negativen Punkt zu dem Gewicht ergibt. Es könnte auch nur einen halben oder viertel Punkt für richtige Zeitpunkte geben. Mit anderen Worten, die Gewichtung für Signale die zu "richtigen" bzw. "falschen" Zeitpunkten empfangen wurden, könnten unterschiedlich sein.

Gemäß einer bevorzugten Ausführungsform können in Abhängigkeit von äußeren Störeinflüssen die Kriterien für die Beurteilung dass ein richtiges Signal zu einem richtigen Empfangszeitpunkt empfangen wurde und/oder ein richtiges Signal zu einem falschen Zeitpunkt nicht empfangen wurde eingestellt werden und/oder dynamisch während des Betriebs geändert werden. Wie oben bereits diskutiert, wird die Datenmenge der einzelnen Datensignale reduziert, so dass es in Bezug auf die Länge der Datensignale für einen Angreifer leichter werden kann, diese kurzen Datensignale nachzuahmen, d.h., es wird für die Basisstation schwieriger wenn nicht sogar unmöglich, nur anhand des Inhalts der Datensignale zu beurteilen, ob die Datensignale vom "richtigen" drahtlosen elektronischen Schlüssels kommen oder von einem Angreifer. Die Basisstation wird richtig imitierte Datensignale daher als "richtige" Datensignale identifizieren. Allerdings müssen die richtigen Datensignale zu den richtigen Zeitpunkten empfangen werden und zu den restlichen Zeitpunkten nicht. Zufälligerweise könnte auch ein Störsignal als ein Datensignal identifiziert werden, jedoch würde ein solches Störsignal auch zu anderen Zeitpunkten empfangen werden. Um dies zu verhindern und dennoch die Datensignale im Rauschen der Störsignale sicher zu identifizieren, kann beispielsweise jedes Intervall I (oder jeder Zeitraum R) in N Subintervalle unterteilt werden (N ist natürliche Zahl). Es wird dann überprüft, ob in y Subintervallen (mit 1 <= y < N) mit den stärksten Signalen, "richtige" Datensignale empfangen wurden und/oder in den N-y Subintervallen keine entsprechenden Datensignale empfangen wurden. Zusätzlich können die Datensignale in den y Subintervallen der Stärke nach geordnet werden und der Stärke nach überprüft werden. Ist in keinem der y Subintervalle ein "richtiges" Datensignal identifiziert worden, so wird dies gespeichert und ggf. der Zugriff verweigert.

Auch ohne eine Einteilung des Zeitstrahls in die gleich langen Intervalle I₁, I₂, ... können die Zeitpunkte der ausgesendeten Datensignale S₁, S₂, ... als Datensignale beschrieben werden, wobei die Intervalle J₁, J₂, ...zwischen diesen Datensignalen S₁, S₂, ...unregelmäßig im Sinne der vorliegenden Erfindung sind.

Wenn sich der drahtlose elektronische Schlüssel 2 aus dem Wirkkreis U des Laptops 100 bewegt, sendet der drahtlose elektronische Schlüssel immer noch mit den Signalen Sx . Befindet sich der drahtlose elektronische Schlüssel nur einige Minuten außerhalb des Wirkkreises U, so sendet der drahtlose elektronische Schlüssel stets weiter, die Basisstation empfängt die vom drahtlose elektronische Schlüssel ausgesendeten Signale jedoch nicht und verweigert den Zugriff auf das Laptop. Bewegt sich der drahtlose elektronische Schlüssel jedoch innerhalb weniger Minuten wieder in den Wirkkreis, so erkennt die Basisstation die vom drahtlosen elektronischen Schlüssel ausgesendeten Signale zu den richtigen Zeitpunkten und erlaubt wieder einen Zugriff auf den Laptop. Für einen Benutzer ist eine solche PC bzw. Laptopabsicherung besonders vorteilhaft, da er sich nach einer erstmaligen Authentifizierungsphase, in der der Benutzer eine Taste am drahtlose elektronische Schlüssel drücken sollte und vorzugsweise zur Erhöhung der Sicherheit eine PIN in den Computer eingeben sollte, sich später um nichts mehr kümmern muss. Der Zugriff wird dem Benutzer automatisch gewährt, sobald er sich zusammen mit dem drahtlosen elektronischen Schlüssel 2 in der Nähe des Laptops 100 befindet.

Wenn sich der Benutzer jedoch über einen längeren Zeitraum, beispielsweise länger als eine halbe Stunde vom Laptop entfernt, erkennt der drahtlose elektronische Schlüssel, dass er schon seit mehr als 30 Minuten Datensignale ausgesendet hat, ohne von der Basisstation eine Rückmeldung bekommen zu haben. In diesem Fall schaltet der drahtlose elektronische Schlüssel ab, d.h. es werden keine weiteren Datensignale vom drahtlosen elektronischen Schlüssel ausgesendet. So kann ein Benutzer beispielsweise ohne zusätzlichen Maßnahmen einfach nach Hause gehen; der Laptop wird und bleibt geschützt und auch der drahtlose elektronische Schlüssel schaltet sich automatisch ab. Wenn der Benutzer nach einer solchen langen Zeitspanne nun wieder Zugriff auf den Laptop haben möchte, muss er die primäre Authentifizierungsphase wieder neu initialisieren, beispielsweise durch Drücken eines Knopfes am drahtlosen elektronischen Schlüssel. Um einen derartigen Mechanismus zu realisieren ist es notwendig, dass der elektronische Schlüssel kein reiner Transmitter ist, sondern auch Signale von der Basisstation empfangen kann, beispielsweise die oben genannten Rückmeldungen. Da die Rückmeldungen von der Basisstation ausgesendet werden, muss der elektronische drahtlose Schlüssel, d.h., der Transponder, nur für den Empfang dieser Rückmeldungen Energie aufbringen, wobei die aufzubringende Energie für das Empfangen geringer sein kann als für ein Aussenden eines Signals.

## Patentansprüche

1. Sicherungssystem (42) mit:
einer Basisstation (1) und
einem drahtlosen elektronischen Schlüssel (2),
wobei die Basisstation (1) einen Zugriff auf ein Objekt steuert in Abhängigkeit von Datensignalen, die die Basisstation (1) vom drahtlosen elektronischen Schlüssel (2) empfängt,
**dadurch gekennzeichnet, dass**
der drahtlose elektronische Schlüssel (2) ausgebildet ist, eine Folge von Datensignalen (S) auszusenden,
wobei die gesamte Sendezeit in gleich große Intervalle (Iₓ) mit einer vorbestimmten Zeitdauer unterteilt wird, und jedes dieser Intervalle (Iₓ) in eine vorbestimmte Anzahl von Subintervallen (i_{x-y}) unterteilt wird,
wobei die Datensignale (S) der Folge zu Sendezeitpunkten ausgesendet werden und innerhalb jedes Intervalls (Iₓ) ein Subintervall (i_{x-y}) als Zeitraum pseudozufällig ausgewählt wird innerhalb dessen ein Sendezeitpunkt der Folge der Sendezeitpunkte liegt,
wobei die Basisstation (1) ausgebildet ist, den Zugriff auf das Objekt
i) zuzulassen, solange die vom drahtlosen elektronischen Schlüssel (2) ausgesendeten Datensignale zu unregelmäßigen Empfangszeitpunkten empfangen wurden, die den pseudozufällig ausgewählten Subintervallen für die Sendezeitpunkte entsprechen, und/oder
ii) zu verweigern, sobald die vom drahtlosen elektronischen Schlüssel (2) ausgesendeten Datensignale zu unregelmäßigen Empfangszeitpunkten empfangen wurden, die den pseudozufällig ausgewählten Subintervallen für die Sendezeitpunkte nicht entsprechen.

2. Sicherungssystem nach Anspruch 1, wobei die Basisstation (1) und der drahtlose elektronische Schlüssel (2) ausgebildet sind, in einem Initialisierungsprozess zwischen Basisstation (1) und drahtlosem elektronischen Schlüssel (2) eine Grundlage für die Berechnung der pseudozufälligen Auswahl der Subintervalle (i_{x-y}) zu vereinbaren, sodass die Basisstation (1) und der drahtlose elektronische Schlüssel (2) die gleichen Subintervalle (i_{x-y}) für die Sendezeitpunkte und entsprechenden Empfangszeitpunkte berechnen können, wobei als Grundlage vorzugsweise ein gemeinsamer Startwert dient.

3. Sicherungssystem nach einem der Ansprüche 1 oder 2, wobei die Basisstation (1) angepasst ist, in einem bestimmten Zeitraum (Rx), der um jeden unregelmäßigen Empfangszeitpunkt (Sx) herum gelegt wird, zu überprüfen, ob das jeweilige Datensignal im Subintervall um den vereinbarten Zeitpunkt empfangen wurde und zu restlichen Subintervallen innerhalb des Zeitraums (Rx) nicht empfangen wurde.

4. Sicherungssystem nach Anspruch 3, wobei der bestimmte Zeitraum (Rx) mindestens Faktor 10 länger ist, als das durch das Modulationsverfahren vorgegebene Subintervall, und der bestimmte Zeitraum (Rx) fest vorgegeben ist oder variabel ist, vorzugsweise fest während des laufenden Betriebs ist.

5. Sicherungssystem nach einem der Ansprüche 3 oder 4, wobei die Basisstation (1) zur Bestimmung der Zugriffssteuerung ausgebildet ist, eine bestimmte Anzahl von y Subintervallen innerhalb des bestimmten Zeitraums (Rx) mit den stärksten Datensignalen zu bestimmen, wobei y ≥ 1 gilt, vorzugsweise y > 1, und einen Zugriff zuzulassen, wenn eines dieser Subintervalle (i_{x-y}) den vereinbarten Zeitpunkt (Sx) enthält und y vorzugsweise in Relation zum vorhandenen Störspektrum gewählt wird.

6. Sicherungssystem nach einem der Ansprüche 1 bis 5, wobei empfangene und nichtempfangene Signale in einem Bewertungsfilter mittels Filterfunktion gewichtet werden und der Zugriff auf das Objekt von der Basisstation ab Überschreiten eines Schwellwertes verweigert wird.

7. Sicherungssystem nach einem der vorhergehenden Ansprüche, wobei die drahtlose Verbindung zwischen dem drahtlosen elektronischen Schlüssel (2) und Basisstation (1) über induktive Kopplung erfolgt.

8. Sicherungssystem nach einem der vorhergehenden Ansprüche, wobei der drahtlose elektronische Schlüssel (2) ausgebildet ist, eine primäre Authentifizierung in einem bidirektionalen Initialisierungsprozess zwischen Basisstation (1) und drahtlosen elektronischen Schlüssel (2) stattfinden zu lassen, der vorzugsweise gemäß einem Challenge-Response-Verfahren abläuft und vorzugsweise verschlüsselt abläuft, und wobei vorzugsweise während dieser primären Authentifizierung ein Startwert für die Erzeugung der Pseudozufallsreihe ausgehandelt wird.

9. Sicherungssystem nach einem der vorhergehenden Ansprüche, wobei der drahtlose elektronische Schlüssel (2) ausgebildet ist, zusätzlich zu den pseudozufällig ausgewählten Sendezeitpunkten eine zweiten Folge von Zeitpunkten nach Signalen der Basisstation zu horchen, wobei in Abhängigkeit von deren Präsenz das weitere Aussenden in den zufälligen ersten Zeitpunkten fortgeführt wird oder nicht.

10. Verfahren zum Sichern eines Zugriffs bzw. Zutritts auf bzw. in ein Objekt (100), insbesondere mit einem Sicherungssystem nach einem der vorstehenden Ansprüche, mit den folgenden Schritten:
Bereitstellen einer Basisstation (1) und Koppeln der Basisstation mit dem zu sichernden Objekt,
Bereitstellen eines drahtlosen elektronischen Schlüssels (2),
Senden einer Folge von Datensignalen (S) vom drahtlosen elektronischen Schlüssel (2) an die Basisstation (1) zu bestimmten Sendezeitpunkten und
Steuern des Zugriffs auf das Objekt mit Hilfe der Basisstation (1) in Abhängigkeit vom Empfang der Datensignale,
**dadurch gekennzeichnet, dass** die gesamte Sendezeit in gleich große Intervalle (Iₓ) mit einer vorbestimmten Zeitdauer unterteilt wird, und jedes dieser Intervalle (Iₓ) in eine vorbestimmte Anzahl von Subintervallen (i_{x-y}) unterteilt wird, wobei die Datensignale (S) der Folge zu Sendezeitpunkten ausgesendet werden und innerhalb jedes Intervalls (Iₓ) ein Subintervall (i_{x-y}) als Zeitraum pseudozufällig ausgewählt wird innerhalb dessen der Sendezeitpunkt liegt,
wobei der Zugriff auf das Objekt
i) zugelassen wird, solange die vom drahtlosen elektronischen Schlüssel (2) ausgesendeten Datensignale zu den pseudozufälligen Sendezeitpunkten entsprechenden Empfangszeitpunkten empfangen wurden, und/oder
ii) verweigert wird, sobald die vom drahtlosen elektronischen Schlüssel (2) ausgesendeten Datensignale zu den pseudozufälligen Sendezeitpunkten entsprechenden Empfangszeitpunkten nicht empfangen wurden.

11. Verfahren nach Anspruch 10, wobei in einem Initialisierungsprozess zwischen Basisstation (1) und drahtlosem elektronischen Schlüssel (2) der Startwert für die Berechung der pseudozufälligen Sende- und Empfangszeitpunkte vereinbart wird.

## Claims

1. A safety system (42) comprising:
a base station (1) and
a wireless electronic key (2),
wherein the base station (1) controls access to an object depending on data signals which the base station (1) receives from the wireless electronic key (2),
**characterized in that**
the wireless electronic key (2) is configured to transmit a sequence of data signals (S), wherein the entire transmission time is divided into equal intervals (Iₓ) having a predetermined duration and each of said intervals (Iₓ) is divided into a predetermined number of subintervals (i_{x-y}),
wherein the data signals (S) of the sequence are transmitted at transmission moments and a subinterval (i_{x-y}) is pseudorandomly selected within each interval (Iₓ) as a period within which a transmission moment of the sequence of transmission moments is situated,
wherein the base station (1) is configured
(i) to permit access to the object as long as the data signals transmitted by the wireless electronic key (2) have been received at irregular receiving moments which correspond to the pseudorandomly selected subintervals for the transmission moments, and/or
(ii) to deny access to the object as soon as the data signals transmitted by the wireless electronic key (2) have been received at irregular receiving moments which do not correspond to the pseudorandomly selected subintervals for the transmission moments.

2. The safety system according to claim 1, wherein the base station (1) and the wireless electronic key (2) are configured to agree upon a basis for the calculation of the pseudorandom selection of the subintervals (i_{x-y}) in an initialization process between the base station (1) and the wireless electronic key (2) so that the base station (1) and the wireless electronic key (2) can calculate the same subintervals (i_{x-y}) for the transmission moments and the corresponding receiving moments, wherein preferably a common initial value is used as the basis.

3. The safety system according to any one of claims 1 or 2, wherein the base station (1) is adapted to check in a specific period (Rx) which is arranged around each irregular receiving moment (Sx) whether the respective data signal was received in the subinterval at the agreed moment and was not received at the remaining subintervals within the period (Rx).

4. The safety system according to claim 3, wherein the specific period (Rx) is longer than the subinterval predetermined by the modulation process by at least the factor of 10 and the specific period (Rx) is fixedly predetermined or variable, preferably fixed during the running operation.

5. The safety system according to any one of claims 3 or 4, wherein, for the purpose of determining the access control, the base station (1) is configured to determine a specific number of y subintervals within the specific period (Rx) comprising the strongest data signals, wherein it holds that y ≥ 1, preferably that y > 1, and to permit access if one of said subintervals (i_{x-y}) contains the agreed moment (Sx) and y is preferably selected in relation to the present noise spectrum.

6. The safety system according to any one of claims 1 to 5, wherein received and non-received signals are weighted in a weighting filter by means of a filter function and access to the object is denied by the base station when a threshold value is exceeded.

7. The safety system according to any one of the preceding claims, wherein the wireless connection between the wireless electronic key (2) and the base station (1) takes place via inductive coupling.

8. The safety system according to any one of the preceding claims, wherein the wireless electronic key (2) is configured to carry out a primary authentication in a bidirectional initialization process between the base station (1) and the wireless electronic key (2) which preferably takes place according to a challenge-response procedure and preferably takes place in an encrypted form, and wherein an initial value for generating the pseudorandom series is preferably negotiated during this primary authentication.

9. The safety system according to any one of the preceding claims, wherein the wireless electronic key (2) is configured to listen for signals from the base station for a second series of moments in addition to the pseudorandomly selected transmission moments, wherein the further transmission at the random first moments is continued or not depending on their presence.

10. A process for securing access to an object (100), in particular by means of a safety system according to any one of the preceding claims, comprising the following steps:
providing a base station (1) and coupling the base station with the object to be secured,
providing a wireless electronic key (2),
transmitting a sequence of data signals (S) from the wireless electronic key (2) to the base station (1) at specific transmission moments and
controlling access to the object by means of the base station (1) depending on the receipt of the data signals,
**characterized in that** the entire transmission time is divided into equal intervals (Iₓ) having a predetermined duration and each of said intervals (Iₓ) is divided into a predetermined number of subintervals (i_{x-y}), wherein the data signals (S) of the sequence are transmitted at transmission moments and a subinterval (i_{x-y}) is pseudorandomly selected within each interval (Iₓ) as a period within which the transmission moment is situated,
wherein access to the object
(i) is permitted as long as the data signals transmitted by the wireless electronic key (2) have been received at receiving moments corresponding to the pseudorandom transmission moments, and/or
(ii) is denied as soon as the data signals transmitted by the wireless electronic key (2) have not been received at receiving moments corresponding to the pseudorandom transmission moments.

11. The process according to claim 10, wherein the initial value for the calculation of the pseudorandom transmission and receiving moments is agreed upon in an initialization process between the base station (1) and the wireless electronic key (2).

## Revendications

1. Système de sécurisation (42), avec :
une station de base (1) et
une clé électronique sans fil (2),
où la station de base (1) commande un accès à un objet en fonction de signaux de données reçus par la station de base (1) de la clé électronique sans fil (2),
**caractérisé en ce que**
la clé électronique sans fil (2) est prévue pour émettre une séquence de signaux de données (S),
où le temps d'émission total est divisé en intervalles (Iₓ) de grandeur égale de durée définie, et chacun desdits intervalles (Iₓ) est subdivisé en un nombre défini de sous-intervalles (i_{x-y}),
où les signaux de données (S) de la séquence sont émis à des moments d'émission et où un sous-intervalle (i_{x-y}) est sélectionné de manière pseudo-aléatoire à l'intérieur de chaque intervalle (Iₓ), en tant que période à l'intérieur de laquelle est compris un moment d'émission de la séquence des moments d'émission,
où la station de base (1) est prévue pour
i) autoriser un accès à l'objet, tant que les signaux de données émis par la clé électronique sans fil (2) sont reçus à des moments de réception irréguliers correspondant aux sous-intervalles sélectionnés de manière pseudo-aléatoire pour les moments d'émission, et/ou
ii) interdire un accès à l'objet, dès que les signaux de données émis par la clé électronique sans fil (2) sont reçus à des moments de réception irréguliers ne correspondant pas aux sous-intervalles sélectionnés de manière pseudo-aléatoire pour les moments d'émission.

2. Système de sécurisation selon la revendication 1, où la station de base (1) et la clé électronique sans fil (2) sont prévues pour convenir une base pour le calcul de la sélection pseudo-aléatoire des sous-intervalles (i_{x-y}) lors d'un processus d'initialisation entre station de base (1) et clé électronique sans fil (2), de sorte que la station de base (1) et la clé électronique sans fil (2) peuvent calculer les mêmes sous-intervalles (i_{x-y}) pour les moments d'émission et les moments de réception correspondants, une valeur initiale commune servant préférentiellement de base.

3. Système de sécurisation selon la revendication 1 ou la revendication 2, où la station de base (1) est adaptée pour contrôler pendant une période définie (Rx), comprenant chaque moment de réception (Sx) irrégulier, si le signal de données respectif a été reçu dans le sous-intervalle comprenant le moment convenu et n'a pas été reçu dans les sous-intervalles restants à l'intérieur de la période (Rx).

4. Système de sécurisation selon la revendication 3, où la période définie (Rx) est plus longue d'au moins un facteur 10 que le sous-intervalle prescrit par le processus de modulation, et où la période définie (Rx) est fixement prescrite ou variable, préférentiellement fixe en cours de fonctionnement.

5. Système de sécurisation selon la revendication 3 ou la revendication 4, où la station de base (1) est prévue pour déterminer la commande d'accès, déterminer un nombre y défini de sous-intervalles à l'intérieur de la période définie (Rx) avec les signaux de données les plus forts, y étant supérieur ou égal à 1, préférentiellement supérieur à 1, et autoriser un accès quand un desdits sous-intervalles (i_{x-y}) comprend le moment convenu (Sx), et où y est préférentiellement sélectionné en relation avec le spectre parasite existant.

6. Système de sécurisation selon l'une des revendications 1 à 5, où les signaux reçus et non reçus sont pondérés dans un filtre de pondération au moyen d'une fonction de filtre, et où l'accès à l'objet depuis la station de base est interdit dès qu'une valeur seuil est dépassée.

7. Système de sécurisation selon l'une des revendications précédentes, où la liaison sans fil entre la clé électronique sans fil (2) et la station de base (1) est établie par couplage inductif.

8. Système de sécurisation selon l'une des revendications précédentes, où la clé électronique sans fil (2) est prévue pour faire s'exécuter une authentification primaire lors d'un processus d'initialisation bidirectionnel entre station de base (1) et clé électronique sans fil (2), lequel se déroule préférentiellement conformément à un procédé question/réponse et préférentiellement de manière codée, et où une valeur initiale pour la génération de la série pseudo-aléatoire est négociée préférentiellement pendant ladite authentification primaire.

9. Système de sécurisation selon l'une des revendications précédentes, où la clé électronique sans fil (2) est prévue pour écouter des signaux de la station de base dans une deuxième séquence de moments, en plus des moments d'émission sélectionnés de manière pseudo-aléatoire, l'émission dans les premiers moments aléatoires étant poursuivie ou pas en fonction de la présence de ceux-ci.

10. Procédé de sécurisation d'une utilisation ou d'un accès à ou dans un objet (100), en particulier avec un système de sécurisation selon l'une des revendications précédentes, comprenant les étapes suivantes :
préparation d'une station de base (1) et couplage de ladite station de base avec l'objet à sécuriser,
préparation d'une clé électronique sans fil (2),
envoi d'une séquence de signaux de données (S) de la clé électronique sans fil (2) à la station de base (1) à des moments d'émission définis, et
commande l'accès à l'objet à l'aide de la station de base (1) en fonction de la réception des signaux de données,
**caractérisé en ce que** le temps d'émission total est divisé en intervalles (Iₓ) de grandeur égale de durée définie, et chacun desdits intervalles (Iₓ) est subdivisé en un nombre défini de sous-intervalles (i_{x-y}), les signaux de données (S) de la séquence étant émis à des moments d'émission et un sous-intervalle (i_{x-y}) étant sélectionné de manière pseudo-aléatoire à l'intérieur de chaque intervalle (Iₓ), en tant que période à l'intérieur de laquelle est compris le moment d'émission,
l'accès à l'objet
i) étant autorisé, tant que les signaux de données émis par la clé électronique sans fil (2) sont reçus à des moments de réception correspondant aux moments d'émission pseudo-aléatoires, et/ou
ii) étant interdit, dès que les signaux de données émis par la clé électronique sans fil (2) n'ont pas été reçus à des moments de réception correspondant aux moments d'émission pseudo-aléatoires.

11. Procédé selon la revendication 10, où la valeur initiale pour le calcul des moments d'émission et de réception pseudo-aléatoires est convenue lors d'un processus d'initialisation entre station de base (1) et clé électronique sans fil (2).
